Europäisches Patentamt

European Patent Office

Office européen des brevets

(11) Publication number: **0 211 356**
A1

# (12) EUROPEAN PATENT APPLICATION

(21) Application number: 86110299.4

(22) Date of filing: 25.07.86

(51) Int. Cl.⁴: **A 21 C 15/02**

(30) Priority: 08.08.85 IT 2189385
07.03.86 IT 1967486

(43) Date of publication of application:
25.02.87 Bulletin 87/9

(84) Designated Contracting States:
AT BE CH DE FR GB LI NL SE

(71) Applicant: SEFOR S.r.l.
Corso Italia, 13
I-20122 Milano(IT)

(72) Inventor: Bianchi, Giuseppe
Viale Bacchiglione, 16
I-20139 Milano(IT)

(74) Representative: Lunati, Vittoriano
LUNATI & MAZZONI S.a.s. Via Carlo Pisacane, 36
I-20129 Milano(IT)

(54) **Method and a system for making icecream waffles.**

(57) The invention relates to a method and a system for making icecream waffles.

Provision is made for a waffle paste baking step for waffles having a high sugar content to be carried out on baking surfaces having different shapes from the sought one, a successive shaping step by moulding of the still hot waffles, and a final cooling step carried out through the moulding step itself.

A system is utilised which comprises baking means (2a, 2b) having baking surfaces (4a, 4b) which are substantially flattened, and a moulding device (3a, 3b) placed in series to the baking means (2a, 2b) and provided with moulds movable along a closed loop path.

Fig. 1

EP 0 211 356 A1

Croydon Printing Company Ltd.

1

## METHOD AND A SYSTEM FOR MAKING ICECREAM WAFFLES

This invention relates to a method and a system for making icecream waffles.

As is known, there are several icecream kinds which include, as an integral part thereof and also intended for consumption, variously shaped thin waffles.

Such waffles are important, and may be decisive, to the success and acceptance of an icecream where markedly dimpled into the shapes, for example, of shells or receptacles or jiggers filled with icecream paste.

To make deeply dimpled waffles, a method is known and widely employed comprising the following steps: a) preparation of suitable substantially liquid or creamy pastes; b) metered delivery of the pastes into moulds having the same pattern shape as the finished product; and c) baking the pastes within said moulds.

That approach afforded in the past waffles which could have a variety of peculiar shapes but brought about some serious problems.

A first problem is the high cost of the moulds, which are to provide real baking units complete with all the necessary baking implements.

A second problem is that any change in the pattern of the waffles involves replacement of said moulds and baking units, thereby with the above prior method the patterns of the waffles are rarely changed and this only at a high cost.

A third problem is that the resulting waffles cannot be high-quality ones from the point of view of their value as foodstuff. In fact, for the waffles to be shaken out of the moulds directly after baking, the amount of sugar in the pastes comprising the waffles must be cut down to a minimum. This because a large amount of sugar would make newly baked waffles relatively soft and unstable in shape. It follows that to obtain adequately stiff waffles and shorten the residence time in the moulds after baking, the sugar content of the pastes comprising the waffles should not exceed approximately 18% of the amount of flour that goes into the pastes.

However, it is a known fact that waffles with the best organoleptic properties are to be obtained with definitely larger amounts of sugar, usually in the range from about 40% to 50% of the amount of flour.

It may be appreciated that it would be still possible to make, in such moulds, soft waffles with a high sugar content, but then, it would be necessary to allow them to harden properly before shaking them out. This procedure would be unacceptable because too expensive in terms of energy consumption, the moulds having to be first supplied with heat for baking and then allowed to cool for hardening.

Altogether, current methods of making shaped waffles entail high initial cost, decreased flexibility of the system, and less-than-optimum quality of the resulting waffles.

In view of the above situation, the technical aim underlying this invention is to substantially remedy such prior problems encountered in the art.

Within the this technical aim, it is an important object of this invention to provide a method and a system which afford the ability to make, at a fast and economical rate, waffles with high organoleptic properties as shells, receptacles, jiggers, or items to a variety of different patterns.

A not least object of this invention is to provide a method and a system which enable the pattern of waffles to be changed in an easily carried out and relatively inexpensive manner.

The above-outlined aim and objects are substantially achieved by a method for making icecream waffles, which is characterised in that it comprises the following steps:

baking a waffle paste or dough containing sugar in an amount equal to at least 40% of the amount of flour on baking surfaces whose shape differs from the final shape contemplated for said waffles;

moulding the baked waffles before they have cooled significantly from their baking temperature; and

cooling said waffles through said moulding step being carried out substantially at ambient temperature.

Expediently, a system is provided for making icecream waffles, characterised in that it comprises at least means of baking waffle paste or dough provided with substantially flattened baking surfaces, and a moulding device in series with said baking means and effective to fashion substantially sheet-like waffles oncoming from said baking means.

Further features and the advantages of the invention will become apparent from the following description of preferred embodiments of the method and system for making icecream waffles, as shown in the accompanying drawings, where:

Figure 1 shows diagramatically a first embodiment of the inventive system for making icecream waffles continuously;

4

Figure 2 brings out a portion of the system of Figure 1;

Figures 3 and 4 show in side elevation and cross-section, respectively, the moulds of the moulding device used with the system of Figure 1;

Figure 5 is a general perspective view of a second embodiment of the system of this invention;

Figure 6 brings out a detail of Figure 5;

Figure 7 shows, in elevation and partly cut-away, the moulding device of the system of Figure 5;

Figures 8 and 9 are an enlarged view and sectional view of a portion of the moulding device of Figure 7, shown at two different working stages thereof; and

Figure 10 is a perspective view of a cupped waffle made on the system of Figure 5.

With reference to the drawing figures, the method of this invention is embodied by the following sequential steps.

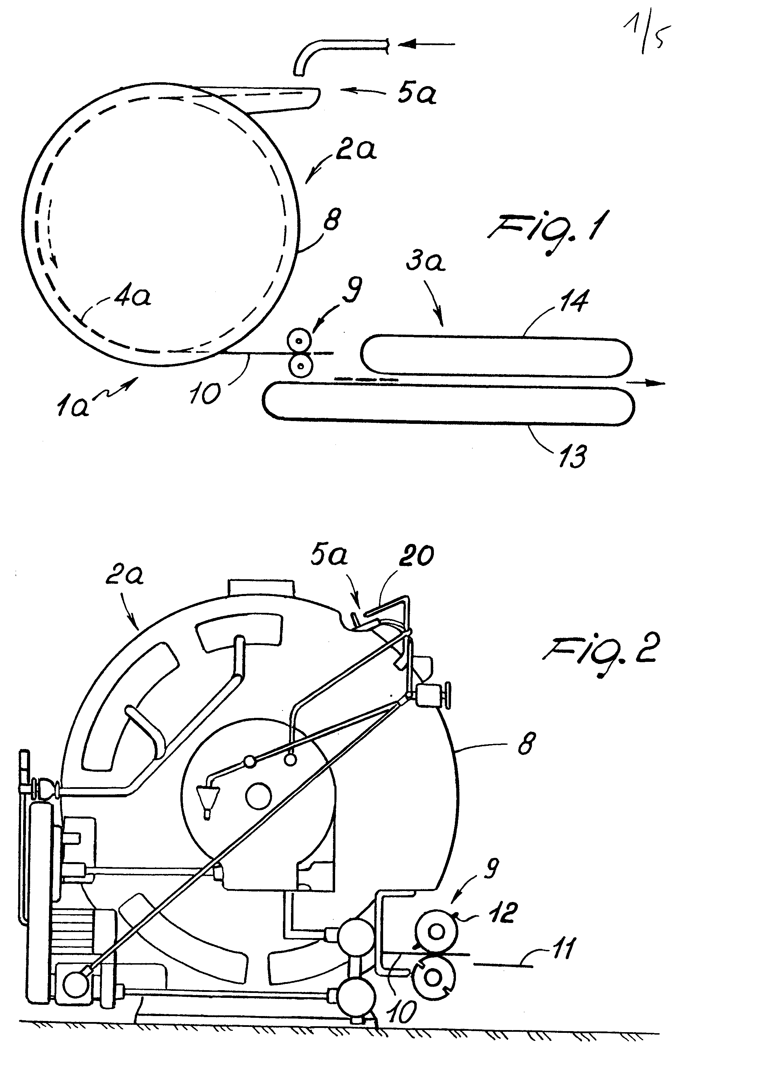

First, a paste or dough is provided which contains sugar in an amount at least equal to about 40% of the amount of flour. Preferably, the amount of sugar is 40% to 45% of the amount of flour. The paste is then additivated conventionally with fats, soyabean lecithin, and other additives (salt, vanilla, etc.). The paste so prepared is then supplied, in either a continuous (see Figure 1) or intermittent (see Figure 2) fashion, to the baking members.

Baking is then effected. Baking takes place advantageously irrespective of the shape sought on baking surfaces which differ in shape from the shape sought, and preferably on unshaped surfaces such as substantially flattened ones and in particular substantially flat or smooth surfaces with respect to the size of the individual waffles.

5

In the instance of continuous production, the paste is formed in a strip for continuous baking, thereafter the strip is cut into portions as an additional step.

The baked and still hot waffles in a sheet-like state are next subjected to more or less deep dimpling operations at ambient temperature to impart them with at least a part of their final shape.

The residence time of the waffles in the moulds, released from the baking members, will be sufficiently long to allow the waffles to cool somewhat. As an example, where waffles are baked at about 200° to 250°C, they would be moulded and then held in the moulds down to a temperature of about 100°C. By suitably switching moulds, the moulding step brings about a significant immediate cooling of the waffles.

In the embodiment of the method relating to the system of Figure 1, the pastes are supplied and baked continuously, then cut into portions, and deeply dimpled individually to completely define the final shape of the waffles. The latter are held back and moved linearly with the moulds over some distance before they are shaken out.

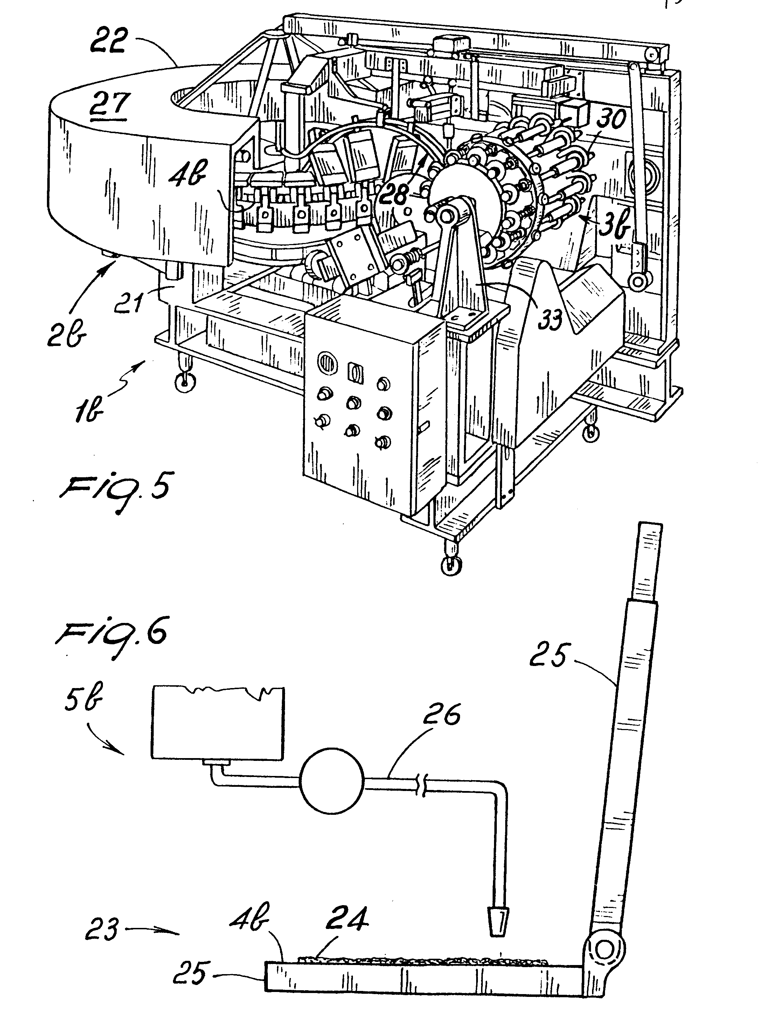

In the embodiment relating to the system of Figure 5, the pastes are supplied intermittently and each portion is baked continuously. On completion of the baking step, the waffles are rolled up in combination with shallow dimpling thereof.

In fact, the baked sheet-like waffles are, while still hot, rolled up and subjected to localised dimpling, thereby a small rolled-up cup is yielded having a dimpled and closed end.

Advantageously, dimpling is carried out gradually to obtain first a guided fold at an area of the baked sheet-like portions,

6

and then squeeze that area. Folding would take place concurrently with rolling up, and squeezing on completion of the rolling up operation.

Thus, on the one side, the baked waffles are allowed to arrange themselves in a sufficient number at the area to be dimpled, and on the other side, a fully rolled up waffle is prevented from being dimpled.

The resulting cups are held back and moved circumferentially and then shaken out of the moulds.

The above method is implemented by a system of which two embodiments are shown in the drawings.

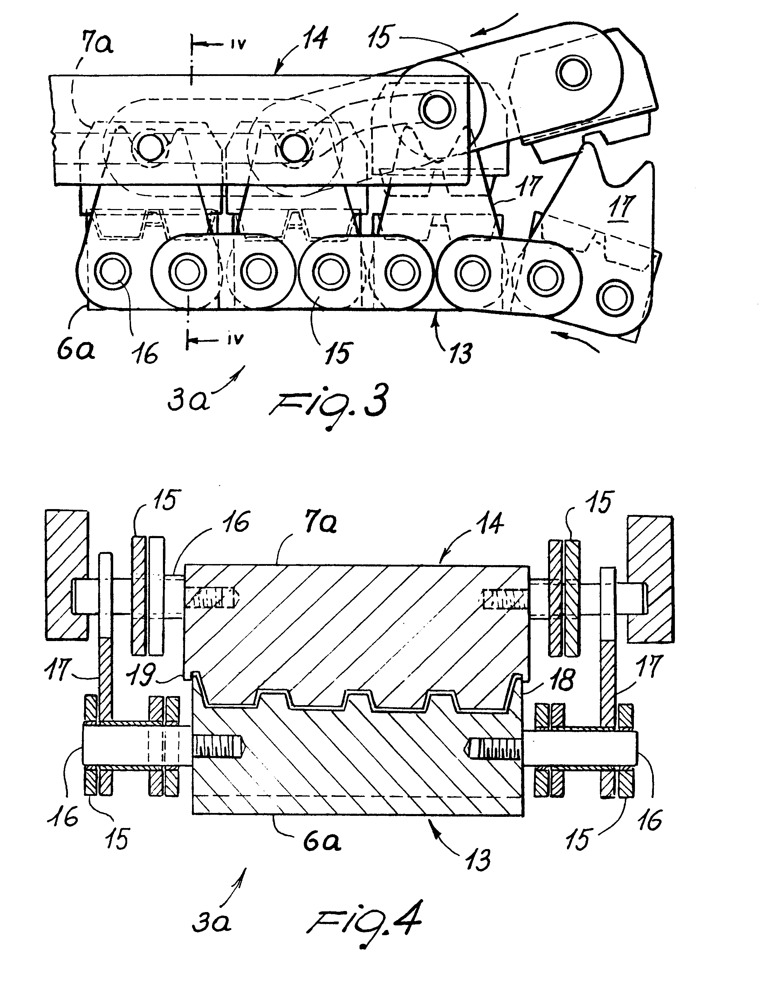

In both embodiments the system of this invention comprises means 2a,2b of baking a paste intended for waffle forming, and a moulding device 3a,3b placed in series to the baking means and being adapted to shape waffles being fed in from the baking means. The characters a,b relate respectively to the embodiment of Figures 1 to 4 and the embodiment of Figures 5 to 9.

Furthermore, in both embodiments, the baking means 2a,2b comprise baking surfaces 4a,4b which are substantially flattened, and even substantially flat in relation to the size of the individual waffles to be formed.

The baking surfaces 4a,4b move along a path adjacent to the moulding device 3a,3b, and in the example shown have a circumferential lay.

On these moving baking surfaces the paste is poured from a supply station 5a,5b through fixed nozzles.

In both embodiments, the moulding device 3a,3b comprises a plurality of moulds 6a,6b movable along a closed loop path. The moulds 6a,6b engage with punches 7a,7b in the same area of the cited path where they receive the flat waffles from the baking means 2a,2b and are associated with shakeout members for the formed waffles located at a distance from said area.

In detail, the first embodiment of the system is brought out in Figures 1 to 4.

The system is generally indicated at 1a in said Figures. It is set for continuous production, and the baking means 2a include a large wheel 8 with its axis horizontal and having a fixed outer shell and a moving inner baking surface 4a. The latter extends band-like in the vicinity of the outer edge of the wheel 8 and on account of its broad size may be regarded as substantially flat with respect to the individual waffles to be formed. The baking surface 4a is adapted for baking a continuous paste layer forming one or more side-by-side strips on the baking surface 4a. The paste is supplied continuously from the supply station 5a, where fixed delivery nozzles 20 are provided, and is moved, by the moving baking surface 4a, past several baking stations, known per se, which are located inwardly of the wheel 8, to reach its outlet at the moulding device 3a.

Between the latter and the baking means 2a there is a cutting device 9 formed of a pair of juxtaposed rollers adapted to pull out a continuous layer 10 and cut it into segments or portions 11 by means of blades 12 and corresponding notches.

The segments 11 insert themselves by gravity into the moulding device 3a, which comprises the moulds 6a and punches 7a.

In particular, the moulding device 3a comprises two loop conveyors with mainly flat and parallel runs, of which the bottom one, indicated at 13, extends to below the cutting device 9 to receive the segments or portions 11, whilst the top one, indicated at 14, overlaps the bottom one at a forward position with respect to the cutting device 9. Each of the loop conveyors 13,14 has side chains 15 carrying the moulds and punches by means of pins 16.

For precise engagement of the moulds and punches, guiding lugs 17 are provided which have a forked end and are fast with the pins, for example, which support the moulds 6a. The guiding lugs 17 are engaged by fitting gradually and removably to the pins 16 fast with the punches 7a.

Also provided are, as shown in Figure 4, edges 18 and 19 of the moulds 6a and punches 7a, respectively, which engage with each other knife-like to cut off excess parts from the waffles and provide neat and properly contoured edges.

The second embodiment of the system is designated 1b and is brought out in Figures 5 to 9.

The system 1b comprises a supporting latticework 21 which supports both the baking means 2b and the moulding device 3b. The baking means 2b are embodied by a carousel 22 defining a wheel lying substantially horizontal and comprising on its interior a plurality of waffle forming stations 23 close together and rotating about a vertical centre axis. Each forming station 23 in the carousel 22 moves both past the supply station 5b (Figure 6) where the creamy pastes for waffle forming, indicated at 24, are delivered through nozzles 26, and past a following baking tunnel 27.

Figure 6 brings out that each forming station 23 of the carousel 22 is defined by two substantially flat plates 25 articulated to each other; that is, a base or baking plate forming with its adjacent plates the baking surface 4b, and a closure or covering plate.

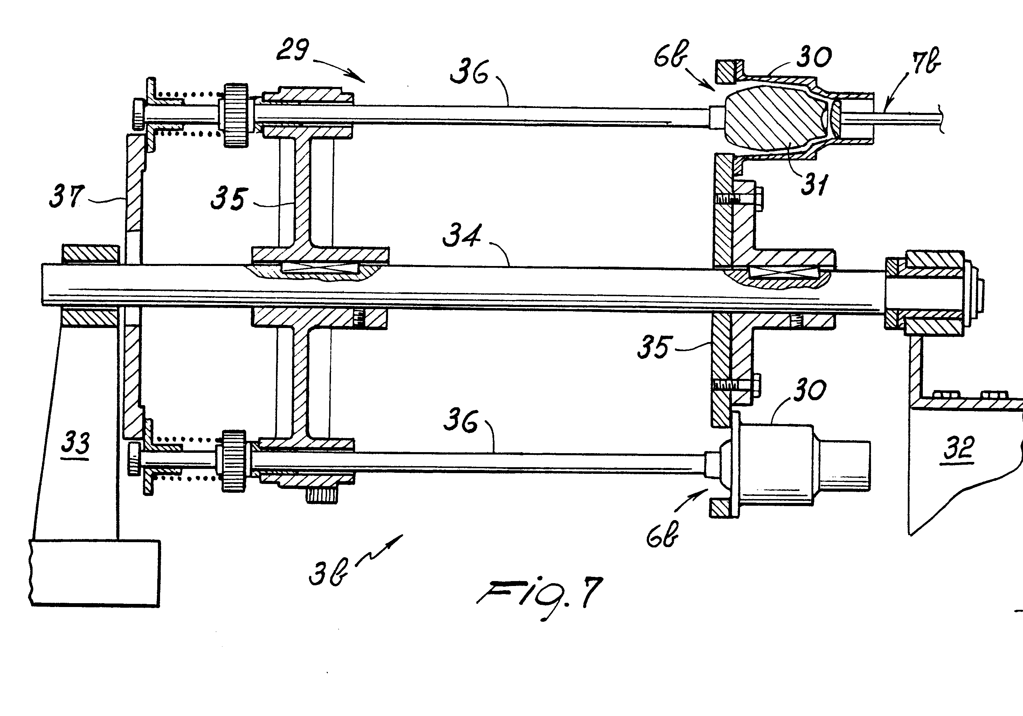

From the baking tunnel 27, the plates 25 are engaged by guides 28, and the baked waffles not yet cooled off are taken, by insertion members known per se, into the moulding members 3b, brought out in Figure 7, which are movable along a circumferential path.

The moulding members 3b comprise moulds 6b each embodied by both a chill 30 and a roll-up body 31, and at least one punch or die 7b embodied by a cap rigid with a small rod. In fact, the moulding members 3b are originally associated with roll-up means 29 to which the roll-up bodies 31 belong.

In detail, with reference to Figure 7, the moulding members 3b and roll-up means 29 are mainly supported by a pair of disk-like flanges 35 keyed to a shaft 34 which is journalled, in turn, on a first end support 33 and a second end support 32.

The disk-like flange 35 located next to the second end support 32 supports the chills 30 rigidly, whilst the other flange carries rods 36 fast with the roll-up bodies 31, slidingly and rotatably. The latter conform with the inside surfaces of the chills 30 and are rotatable relatively to it.

On the remote side from the roll-up bodies 31, the rods 36 are associated with a drive means 37 adapted to reciprocate the bodies 31 slidingly and to rotate them.

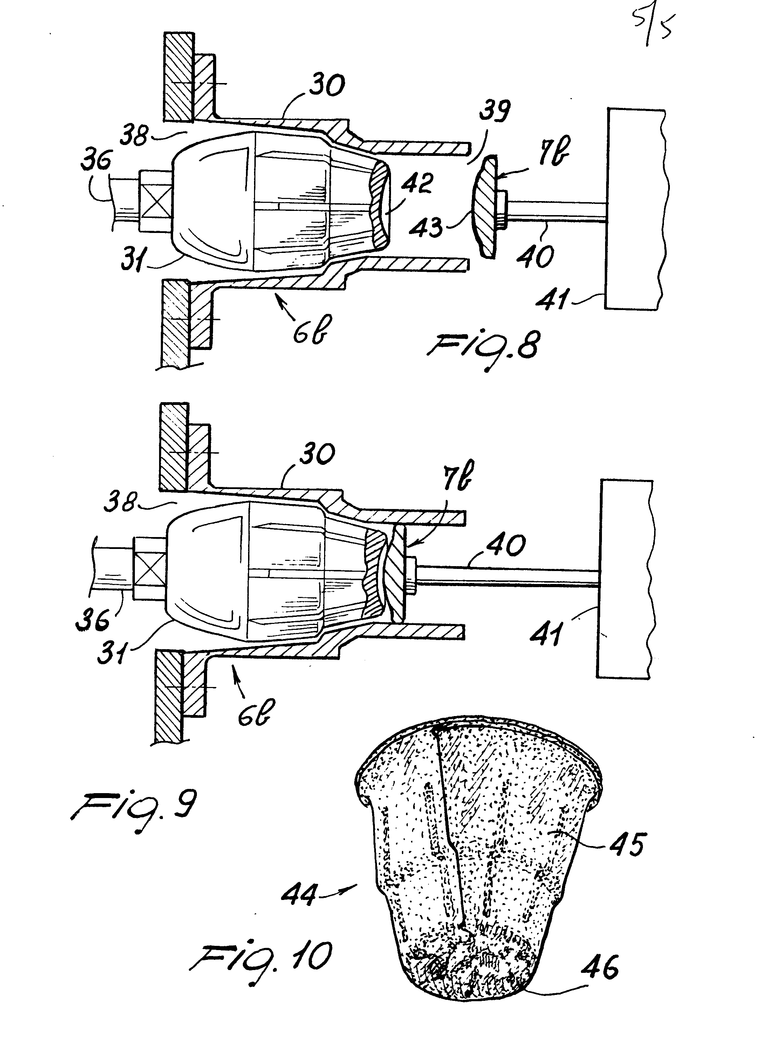

The chills 30 have side notches, not shown, through which newly baked waffles are inserted. Furthermore, the chills 30 have internally a mainly frusto-conical conformation with first and second openings 38 and 39, respectively, (Figures 8 and 9) located respectively at the major base and minor base of said frusto-conical conformation. Through the first opening 38 there is inserted the roll-up body 31 and through the second opening 39 there is inserted the punch 7b which acts on a mould 6b formed of both the chill 30 and the roll-up body 31.

The punch 7b of cap-like shape is supported by a rod 40 movable on operation of a drive unit 41.

The juxtaposed surfaces of the roll-up body 31 and the punch 7b have respectively a concave face 42 and a convex face 43 aligned to each other.

In Figures 7,8 and 9, there is shown a single punch 7b which alternately inserts and retracts from a shaping chill 30, but it would be possible, of course, to provide as many punches 7b as· are the shaping chills 30 and have the drive unit 41 rotate with the shaft 34.

From the operational standpoint, it is pointed out that at the time that the waffles are inserted in a flat state into the chills 30 the roll-up bodies 31 would be rotating to drag and roll up the waffles in the chills. During the roll-up operation, the punches 7b mould that waffle portion which is located at the second opening 39.

On completing substantially one revolution around the shaft 34, the drive means 37 cause each rod 36 to move backwards and cause each roll-up body 31 to come out of its respective chill 30 together with the waffle.

By the above-discussed operations, small cups 44 can be made having the shape shown in Figure 10.

These small cups 44 have a lateral surface 45 rolled up and having a thickness which the equal or a multiple of that of a baked waffle in the flat state; the same may be also formed by repeated rolling for improved strength.

Furthermore, those same small cups have a moulded bottom 46 which is flattened· and preferably concave, to define a bottom edge whereby rest on a surface is facilitated.

The invention affords important advantages.

In fact, a method and a system have been provided which not only enable shaping of waffles as desired with particularly satisfactory organoleptic properties but also the production of deeply dimpled waffles through simple and easily altered means. This because any change in shape can be effected by merely replacing the moulds 6a,6b and punches 7a,7b without touching the baking means. Furthermore, the system can be easily adapted to meet varying production requirements.

Finally it is pointed out that the method and system illustrated have yielded, in particular, a cupped waffle adapted for generic applications as a substitute for both traditional cones and for paper or plastics cups.

The resulting cup is, in fact, edible and simple, strong, convenient, well finished, and tasty.

12

CLAIMS

1. A method for making icecream waffles, characterised in that it comprises the following steps:

baking waffle-making pastes containing sugar in an amount equal at least to about 40% of the amount of flour on baking surfaces which differ in shape from the final shape sought for said waffles;

moulding the baked waffles before the waffles have cooled substantially with respect to the baking temperature; and

cooling said waffles through that same moulding step as carried out at substantially ambient temperature.

2. A method according to Claim 1, characterised in that said pastes are baked on substantially flattened baking surfaces, said baking step yielding substantially flat baked waffles.

3. A method according to Claim 2, characterised in that in combination with said moulding step newly baked waffles are partially rolled up, said moulding step only affecting a portion of the waffles.

4. A method according to Claim 3, characterised in that said limited moulding step is carried out progressively during said waffle roll-up step and include an initial stage of guided folding and a final stage of forced squeezing of said waffles.

5. A system for making icecream waffles, characterised in that it comprises at least baking means (2a,2b) for waffle paste having baking surfaces (4a,4b) substantially flattened with respect to said waffles, and a moulding device (3a,3b) placed in series to said baking means (2a,2b) and adapted to shape waffles oncoming from said baking means (2a,2b).

6. A system according to Claim 5, characterised in that said baking surfaces (4a,4b) are movable along a closed loop path adjacent said moulding device (3a,3b).

7. A system according to Claim 5, characterised in that said moulding device (3a,3b) comprises a plurality of moulds (6a,6b) movable along a closed loop path.

8. A system according to Claim 7, characterised in that said moulding device (3a) comprises moulds (6a) with cutting edges (18) adapted to finish by shearing edges of said waffles.

9. A system according to Claim 7, characterised in that said moulding device (3a) comprises a pair of loop conveyors (13,14) overlapping each other and having the one moulds (6a) and the other punches (7a).

10. A system according to Claim 9, characterised in that said loop conveyors (13,14) comprise supporting chains (15), pins (16) extending between said moulds (6a) and punches (7a) and said supporting chains (15), and guide lugs (17) projecting from said chains (15) of one of said loop conveyors (13) and engaging releasably by jointing fit with said pins (16) on the other of said loop conveyors (14) to position said punches (6a) and moulds (7a) therebetween.

11. A system according to Claim 7, characterised in that said moulding device (3b) is provided in combination with a roll-up device (29) for said waffles.

12. A system according to Claim 11, characterised in that in said moulding device (3b) each said mould (6b) is defined by a chill (30) and a roll-up body (31) inserted into said chill (30), said roll-up body (31) being a part of said roll-up means (29), and that said one punch (7b) is insertable into said chill (30), in juxtaposed relationship with said roll-up body (31).

13. A small cup characterised in that it is formed from a waffle containing sugar in an amount at least equal to about 40% of the amount of flour and has a bottom portion (46) shaped by moulding and a rolled up lateral surface (45).

Fig.1

Fig.2

0211356

2/5

Fig.3

Fig.4

Fig.5

Fig.6

29    36    6b    30    7b

37    35    34    31

33    35    30

36    32

36    6b

Fig. 7

0211356

4/5

Fig.8

Fig.9

Fig.10

European Patent
Office

**EUROPEAN SEARCH REPORT**

**0211356**
Application number

EP 86 11 0299

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 012 588 (UNILEVER LTD.) <br> * Whole document * | 1 | A 21 C 15/02 |
| Y | | 2-4,13 | |
| P,Y | GB-A-2 158 765 (F. HAAS et al.) <br><br> * Whole document * | 2-7,9, 11-13 | |
| Y | US-A-2 745 363 (J. BALTON) <br><br> * Whole document * | 5-7,9, 11,12 | |
| A | FR-A-2 533 115 (F. HAAS) <br> * Whole document * | 7,9 | |
| A | FR-A-2 476 442 (F. HAAS) <br> * Whole document * | 8 | **TECHNICAL FIELDS SEARCHED (Int. Cl.4)** <br><br> A 21 C <br> A 21 B |
| A | US-A-3 269 335 (A.A. HEYMAN) | | |
| A | FR-A-2 365 960 (F. HAAS) | | |

The present search report has been drawn up for all claims

| Place of search | Date of completion of the search | Examiner |
|---|---|---|
| THE HAGUE | 27-11-1986 | FRANKS N.M. |